# EUROPÄISCHE PATENTSCHRIFT

(11) **EP 2 335 529 B1**
(45) Veröffentlichungstag und Bekanntmachung des Hinweises auf die Patenterteilung: **08.08.2012**
(21) Anmeldenummer: 09179979.1
(22) Anmeldetag: 18.12.2009
(51) Int. Cl.: A47J 31/36, A47J 31/06, A47J 31/46

(54) **Vorrichtung zum Zubereiten eines Getränks und Kapsel**
Device for preparing a drink and capsule
Dispositif de préparation d'une boisson et capsule

(43) Veröffentlichungstag der Anmeldung: 22.06.2011
(73) Patentinhaber: Delica AG, 4127 Birsfelden (CH)
(72) Erfinder: Gugerli, Raphael, 8032 Zürich (CH)
(74) Vertreter: Hepp Wenger Ryffel AG

(56) Entgegenhaltungen:
- EP-A1- 1 654 966
- WO-A1-2009/115474
- US-B1- 6 182 554

## Beschreibung

Die Erfindung betrifft eine Vorrichtung zum Zubereiten eines Getränks gemäss dem Oberbegriff von Anspruch 1. Derartige Vorrichtungen werden in letzter Zeit immer häufiger eingesetzt, um beispielsweise Kaffee oder Tee in stets gleich bleibender Qualität portionenweise zuzubereiten. Dabei findet in der Regel in der Aufnahmekammer ein Brühprozess statt, bei dem heisses Wasser in einer dosierten Menge durch die Portionsverpackung durchgeleitet wird. Beispiele für derartige Vorrichtungen sind in der EP 1 646 305, WO 2008/004116 oder WO 2008/087099 beschrieben.

Aus der WO 2009/115474 A1 ist eine Vorrichtung zur Zubereitung eines Getränks aus einer Kapsel bekannt. Eine darin offenbarte Brüheinheit zur Aufnahme der Kapsel besteht aus zwei miteinander in Wechselwirkung tretenden Teilen zur Bildung einer Kammer für die Aufnahme der Kapsel. Eines dieser beiden Teile weist in dem ringförmigen Bereich, in dem die zwei Teile zusammengepresst werden, Mittel zum gezielten Leiten von einer Flüssigkeit auf zur Einstellung von einer Flüssigkeitsleckage, wenn die beiden Teile aneinander gepresst sind.

Ein Problem bei diesen Vorrichtungen besteht darin, dass die dosierte Wassermenge nach dem Brühprozess nicht vollständig in der Form von Extrakt abfliesst. Vielmehr verbleibt eine bestimmte Menge Restwasser in der Brühkammer zurück, die spätestens beim Öffnen der Brühkammer zum Entfernen der benutzten Portionsverpackung abfliesst. Dies ist jedoch unerwünscht, weil das Restwasser das Gerät oder nächste zubereitete Getränk verunreinigt. Eine Kontamination findet insbesondere dann statt, wenn verschiedene Getränkearten mit der gleichen Maschine zubereitet werden, wie z.B. Kaffee, Tee, Milch- oder Kakao-Getränke. Bleibt Restwasser längere Zeit in der geschlossenen Kammer zurück, besteht ausserdem die Gefahr, dass ein Fermentationsprozess beginnt, der zu irreversiblen geschmacklichen Veränderungen in der Brühkammer führt. Auch nach einem Spülvorgang kann Restwasser über längere Zeit in der Brühkammer zurückbleiben.

Ein weiterer Nachteil bekannter Vorrichtungen besteht ausserdem noch darin, dass die Austrittsöffnung an der Aufnahmekammer verstopft, wobei ein Innendruck von gegen 20 bar auftreten kann. Unter einem derartigen Druck werden Dichtungen aufgepresst und Brühwasser spritzt in die Maschine oder im Extremfall sogar nach aussen durch die Eingabeöffnung, selbst bei bereits ausgeschalteter Maschine.

In der DE 20 2005 021 159 wird vorgeschlagen, ein unerwünschtes Auslaufen von allfälligem Restwasser durch ein federbelastetes Verschlussorgan zu verhindern, das sich erst beim Schliessen der Brühkammer öffnet. Dadurch wird das Problem aber nicht wirklich gelöst, weil das Restwasser bei geschlossener Kammer trotzdem ausläuft und bei geöffneter Kammer zurückgehalten wird, sodass es beim nächsten Schliessprozess ausläuft.

Es ist daher eine Aufgabe der Erfindung, eine Vorrichtung der eingangs genannten Art zu schaffen, bei welcher zurückbleibendes Restwassers aus der Brühkammer abgeführt werden kann, ohne dass das bereits zubereitete Getränk oder die Vorrichtung kontaminiert werden. Diese Aufgabe wird erfindungsgemäss mit einer Vorrichtung gelöst, welche die Merkmale im Anspruch 1 aufweist.

Der von der Kammerinnenseite zur Kammeraussenseite führende Drainage-Kanal bewirkt zunächst, dass das Restwasser nicht über den Auslauf abgeführt wird, der für das fertige Getränk vorgesehen ist. Trotzdem bleibt der Drainage-Kanal während des Brühprozesses verschlossen, weil er derart an einem Wandabschnitt eines Kammerteils angeordnet ist, dass er beim Erstellen der Schliessstellung durch die Portionsverpackung und/oder durch das andere Kammerteil abdichtbar ist. Diese Abdichtung beim Brühvorgang ist wichtig, denn dieser findet teilweise unter einem Druck von mehr als 10 bar statt. Sobald die Brühkammer geöffnet bzw. die Portionsverpackung entfernt wird, kann das verbleibende Restwasser über den Drainage-Kanal abfliessen. In bestimmten Fällen kann es sogar bereits genügen, wenn der Überdruck in der Brühkammer nachlässt, sodass die durch die Portionsverpackung erzeugte Dichtwirkung aufgehoben wird.

Der Drainage-Kanal entfaltet seine vorteilhafte Wirkung aber auch unmittelbar nach dem Brühvorgang, wenn die Aufnahmekammer geleert und anschliessend wieder verschlossen wurde. Der Prozess des Auswerfens beispielsweise einer Kaffeekapsel genügt nämlich nicht, um alles noch in den Leitungen befindliche Restwasser zu entfernen. Der Drainage-Kanal sorgt dafür, dass während der Ruhezeit bis zum nächsten Brühvorgang die gesamte Restflüssigkeit abfliessen kann. Der Drainage-Kanal wirkt aber auch als Sicherheitsventil bei sich aufbauendem hohen Innendruck. Der Drainage-Kanal wird nämlich freigelegt, bevor die Dichtungen an der Aufnahmekammer aufgedrückt werden können. Überschüssiges Wasser oder gar Dampf werden somit über den Drainage-Kanal abgeleitet. Damit ist gewährleistet, dass keine sensiblen Maschinenteile wie z.B. Elektronikbausteine usw. beschädigt werden können. Schliesslich bewirkt der Drainage-Kanal auch eine optimale Spülung der Brühkammer. Die zusätzliche Öffnung an der Aufnahmekammer bewirkt nämlich eine Reduktion des Gegendrucks beim Spülprozess und damit eine grössere Durchflussmenge der Spülflüssigkeit pro Zeiteinheit. Insbesondere auch nach einem Spülvorgang gewährleistet der Drainage-Kanal ein schnelles Entleeren und Trocknen der Aufnahmekammer.

Erfindungsgemäß weist der Drainage-Kanal auf der Kammerinnenseite eine Mündungsöffnung auf, welche durch einen Aussenwandabschnitt einer in der Kammer eingeschlossenen Portionsverpackung abdichtbar ist. Bei der Portionsverpackung kann es sich um eine Kapsel, um einen Pouch oder um eine andere Darreichungsform handeln. Selbstverständlich müssen die Aussenkonfiguration der Portionsverpackung und die Innenkonfiguration der Kammer im Bereich der Mündungsöffnung so aufeinander abgestimmt sein, dass die gewünschte Dichtwirkung erzeugbar ist.

Alternativ oder ergänzend kann der Drainage-Kanal aber auch durch einen dem anderen Kammerteil zugeordneten Schliesskörper abdichtbar sein, der in der Schliessstellung den Drainage-Kanal versperrt. Beim Schliesskörper kann es sich beispielsweise um einen Ventilkörper handeln, der beim Schliessen der Kammer direkt in den Drainage-Kanal eingreift und diesen versperrt. Es wäre aber auch denkbar, dass der Drainage-Kanal bei geöffneter Kammer durch ein federbelastetes Ventil in der Offenstellung gehalten wird, wobei der Schliesskörper am anderen Kammerteil lediglich das Ventil in die Schliessstellung verschiebt. Der Schliesskörper muss nicht zwingend unmittelbar am anderen Kammerteil angeordnet sein. Ersichtlicherweise wäre auch eine indirekte Wirkverbindung mit einem anderen Bauelement denkbar.

Bei einer Ausbildung der Portionsverpackung als Kapsel ist es vorteilhaft, wenn eines der Kammerteile als Halter mit einer Kavität zur Aufnahme der Portionsverpackung und das andere Kammerteil als Verschlussteil zum Verschliessen der Kavität ausgebildet ist und wenn der Drainage-Kanal am Halter angeordnet ist. Der Drainage-Kanal lässt sich so auf optimale Weise platzieren. Es spielt dabei grundsätzlich keine Rolle, wie sich die beiden Kammerteile bewegen. Selbstverständlich wäre es auch denkbar, dass der Drainage-Kanal am Verschlussteil angeordnet ist. Je nach Ausbildung der Portionsverpackung könnten die beiden Kammerteile auch völlig symmetrisch ausgebildet sein. Auch eine Anordnung von mehreren Drainage-Kanälen an einem oder an beiden Kammerteilen wäre denkbar.

Weitere Vorteile können erzielt werden, wenn die Kavität wenigstens eine Drainage-Rinne aufweist, welche sich bezogen auf eine Längsmittelachse vorzugsweise vom Boden der Kavität gegen deren Öffnung erstreckt. Die Drainage-Rinne erleichtert die Ableitung des Restwassers insbesondere auch vom Bodenbereich und über die gesamte Länge der Brühkammer. Die Drainage-Rinne hat weiter den vorteilhaften Effekt, dass sie das Auswerfen der Kapsel erleichtert, weil die Saugwirkung zwischen der Innenwand der Kavität und der Aussenwand der Kapsel reduziert oder aufgehoben wird. Die Drainage-Rinne kann sich linear über die Länge der Kavität erstrecken. Denkbar wäre aber auch die Form einer Spirale oder eine andere Konfiguration.

Die Kavität kann ferner auf der Seite ihrer Öffnung eine zur Längsmittelachse vorzugsweise im rechten Winkel geneigte Stützschulter zur Abstützung einer komplementären Wandpartie der Portionsverpackung aufweisen, wobei die Drainage-Rinne in die Stützschulter mündet und der Drainage-Kanal in der Stützschulter oder in einem unmittelbar daran angrenzenden Bereich beginnt. Auf diese Weise verschliesst die Portionsverpackung in der Schliessstellung nicht nur den Drainage-Kanal, sondern gleichzeitig auch noch das öffnungsseitige Ende der Drainage-Rinne. Ersichtlicherweise ist es vorteilhaft, wenn die Drainage-Rinne auf der gleichen radialen Ebene in die Stützschulter mündet, auf welcher auch die Mündungsöffnung des Drainage-Kanals liegt.

Zum Erzielen einer Strömung durch die Portionsverpackung kann wenigstens ein Kammerteil wenigstens ein Penetrationselement zum penetrieren der Portionsverpackung in der Schliessstellung aufweisen. Vorzugsweise sind beide Kammerteile mit wenigstens je einem Penetrationselement versehen, wobei in der Schliessstellung aber noch nicht zwingend beide Seiten der Portionsverpackung penetriert werden müssen. Bei bestimmten Systemen erfolgt die Penetration auf der Auslassseite auch erst durch Deformation der Portionsverpackung bzw. durch Überschreiten einer Reissspannung beim Aufbau eines Innendrucks. Es sind aber auch Portionsverpackungen bekannt, welche selbst mit Penetrationsmitteln versehen sind, welche beim Aufbau eines Drucks aktiviert werden.

Auch komplexe Portionsverpackungen mit eingebauten Ventilen sind bekannt, welche durch schliessen der Brühkammer oder durch Druckeinwirkung geöffnet werden.

Der Drainage-Kanal kann einen Querschnitt aufweisen, der kleiner ist als der Querschnitt der Eintrittsöffnung und/oder der Austrittsöffnung. Vorzugsweise beträgt der Querschnitt zwischen 0,1 mm² und 10 mm². Der relativ kleine Querschnitt des Drainage-Kanals gegenüber der Eintrittsöffnung bzw. der Austrittsöffnung hat den Vorteil, dass eine Spülung der Brühkammer möglich ist, wobei der grössere Teil des Spülwassers durch die Austrittsöffnung und nur ein kleinerer Teil durch den Drainage-Kanal fliesst.

Um zu verhindern, dass die über den Drainage-Kanal abgeführte Flüssigkeit die Vorrichtung verunreinigt, ist es vorteilhaft, wenn der Drainage-Kanal zu einem Gefäss zur Aufnahme der abgeführten Flüssigkeit führt. Dabei kann es sich beispielsweise um die Tropfschale handeln, die ohnehin unter dem Auslass für das Getränk angeordnet ist. Der Drainage-Kanal könnte zu diesem Zweck an eine Rohrleitung oder an eine Schlauchleitung angeschlossen sein.

Schliesslich ist es vorteilhaft, wenn die Aufnahmekammer rotationssymmetrisch ausgebildet ist und wenn der Drainage-Kanal als radiale Bohrung in eine der Kammerteile ausgebildet ist. Bei den heute üblichen Kapselsystemen verläuft die Längsmittelachse der Brühkammer in der Regel immer etwa horizontal, weil die Kapseln unter Schwerkrafteinwirkung ihre Zwischenstellung erreichen, bevor sie in der Brühkammer eingeschlossen werden. Eine radiale Bohrung als Drainage-Kanal ist die kürzest mögliche Verbindung zwischen Innenseite und Aussenseite der Kammer. Die radiale Bohrung kann dabei am tiefsten Punkt der Brühkammer angeordnet sein, sodass das Restwasser nach unten abfliesst. Selbstverständlich muss der Drainage-Kanal nicht radial zur Längsmittelachse der Kammer verlaufen. Je nach Bauweise der Vorrichtung könnte er sich über bestimmte Abschnitte auch annähernd parallel zu dieser erstrecken. Auch muss der Querschnitt des Drainage-Kanals nicht zwingend kreisförmig sein. Wichtig ist in jedem Fall, dass der Drainage-Kanal so angelegt ist, dass Flüssigkeit unter Schwerkrafteinwirkung nach unten abfliessen kann. In bestimmten Fällen könnte sich der Drainage-Kanal zwischen der Kammerinnenseite und der Kammeraussenseite aber auch auf eine höher gelegene Ebene erstrecken. Dies könnte beispielsweise dann der Fall sein, wenn ein dampfförmiges Medium wie z.B. Wasserdampf aus der Kammer abgeführt werden soll.

Weiter wird auch eine Kapsel offenbart, die besonders vorteilhaft in der vorstehend beschriebenen Vorrichtung eingesetzt werden kann. Die umlaufende Schulter mit dem im Querschnitt geneigten oder gekrümmten Wandabschnitt ermöglicht eine vorteilhafte Abstützung der Kapsel in der Brühkammer, wobei die Aussenseite der Schulter eine Dichtfläche bildet, welche dichtend gegen eine komplementäre Auflagefläche pressbar ist. Um eine optimale Dichtwirkung erzielen zu können, sollte der Wandabschnitt vorteilhaft eine Breite von wenigstens 1 mm aufweisen. Die Höhe der Schulter beträgt vorzugsweise wenigstens 3,5 mm, um eine genügend grosse Dichtfläche zu erhalten. Unter dem Begriff Breite ist dabei das Projektionsmass zu verstehen, also die Breite gemessen im rechten Winkel zur Längsmittelachse der Kammer. Die relativ ausgeprägte umlaufende Schulter an der Kapsel hat aber auch noch weitere Vorteile. Einerseits kann sie wie aus der WO 2008/087099 an sich bereits bekannt, einen Stapelrand bilden, der es ermöglicht, die noch leeren Kapselkörper aufeinander zu stapeln, sodass sie in der Abfüllanlage besser vereinzelt werden können. Die Schulter bewirkt aber zusätzlich auch noch eine Änderung der Strömungsrichtung des unter Druck in die Kapsel eingepressten Brühwassers. Dieses neigt nämlich dazu, sich unmittelbar entlang der Kapselwand einen Kanal zu suchen, um auf dem kürzesten Weg zur Austrittsöffnung zu gelangen. Dieser Prozess wird auch als "Channeling" bezeichnet, der ersichtlicherweise dazu führt, dass die Extraktion nur unvollständig abläuft. Die umlaufende Schulter bewirkt dagegen, dass die Strömung konzentrisch gegen das innere der Kapsel gelenkt wird, sodass sich keine störenden Durchflusskanäle an der Innenwand der Kapsel bilden können.

Weitere Vorteile beim Brühprozess können erreicht werden, wenn wenigstens eines der Kammerteile gegen die Aufnahmekammer gerichtete Kompressionsmittel aufweist, mit denen in der Schliessstellung die Portionsverpackung beaufschlagbar sind. Diese Kompressionsmittel werden vorzugsweise in Kombination mit den vorstehend erwähnten Penetrationsmitteln eingesetzt und zwar bevorzugt derart, dass sie den Randbereich des Kapseldeckels beaufschlagen. Dadurch wird der Deckel der Kapsel straff aufgespannt, sodass die Penetrationsmittel besser eindringen können und einströmendes Wasser über die gesamte Deckelfläche verteilt wird. Die Kompressionsmittel können dabei bolzenartig zylindrisch oder auch quaderförmig ausgebildet sein. Die Stirnseite diese Kompressionsmittel können gerundet oder eckig ausgebildet sein. In bestimmten Fällen wäre auch eine Kombination von Kompressionsmitteln und Penetrationsmitteln denkbar.

Weitere Vorteile und Merkmale der Erfindung ergeben sich aus der nachfolgenden Beschreibung von Ausführungsbeispielen und aus den Zeichnungen. Es zeigen:
- Figur 1: eine perspektivische Darstellung einer Kaffeemaschine beim Laden einer Kapsel,
- Figur 2: die Kaffeemaschine gemäss Figur 1 beim Ausgeben des Getränks und mit separat dargestelltem Auffangbehälter,
- Figur 3: einen Querschnitt durch die Kaffeemaschine gemäss Figur 1 in stark vereinfachter Darstellung und mit einer erfindungsgemässen Vorrichtung,
- Figur 4: eine perspektivische Darstellung eines Kapselhalters mit Kapsel und Verschlussteil,
- Figur 5: einen Längsschnitt durch einen Kapselhalter,
- Figur 6: einen Querschnitt durch den Kapselhalter gemäss Figur 5 im Bereich des Drainage-Kanals,
- Figur 7: einen perspektivischer Längsschnitt durch die Anordnung gemäss Figur 4,
- Figur 8: die Anordnung gemäss Figur 7 kurz vor dem Verschliessen der Aufnahmekammer,
- Figur 9: einen Längsschnitt durch eine verschlossene Brühkammer während des Brühprozesses,
- Figur 10: einen Längsschnitt durch ein abgewandeltes Ausführungsbeispiel einer Aufnahmekammer,
- Figur 11: einen Querschnitt durch die Aufnahmekammer gemäss Figur 10 im Bereich des Drainage-Kanals,
- Figur 12: verschiedene Ausführungsbeispiele von Verschlussteilen mit alternativen Kompressionsmitteln,
- Figur 13: einen Längsschnitt durch ein alternatives Ausführungsbeispiel mit durch das Verschlussteil verschliessbarem Drainage-Kanal,
- Figur 14: eine perspektivische Darstellung einer erfindungsgemässen Kapsel,
- Figur 15: einen Schnitt durch zwei gestapelte Kapselkörper,
- Figur 16: einen Schnitt durch eine erfindungsgemässe Kapsel in vergrösserter Darstellung,
- Figur 17: eine Draufsicht auf den Kapselboden der Kapsel gemäss Figur 16,
- Figur 18: einen Schnitt durch einen Kapselkörper gemäss einem weiteren Ausführungsbeispiel, und
- Figur 19: einen Schnitt durch einen Kapselkörper gemäss einem weiteren Ausführungsbeispiel.

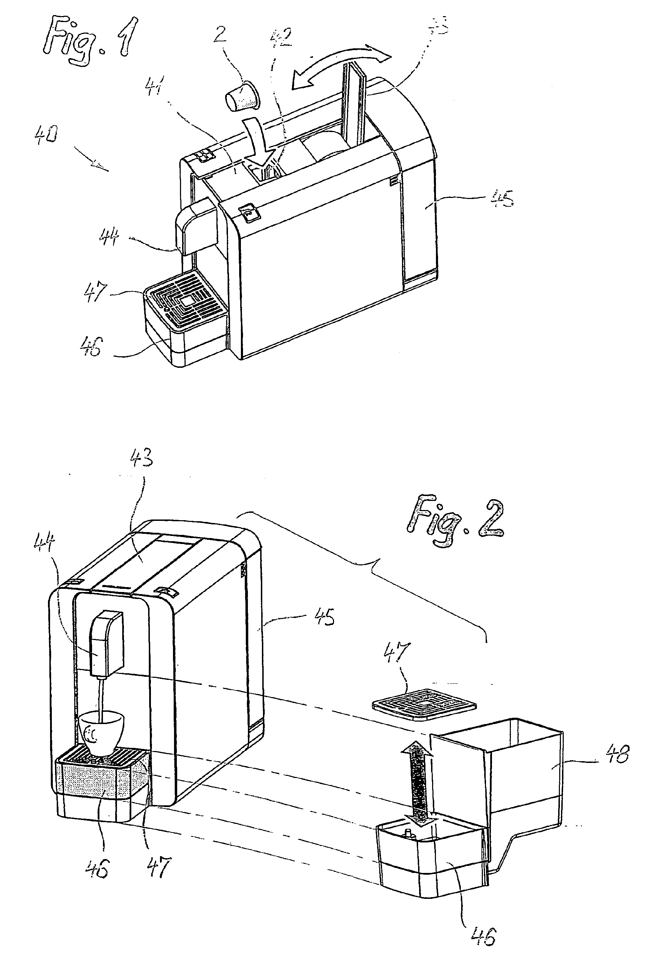

In Figur 1 ist eine mit 40 bezeichnete Kaffeemaschine dargestellt, bei der auf an sich bekannte Art und Weise eine Kaffeekapsel 2 durch eine Eingabeöffnung 42 einem Brühmodul 41 zugeführt werden kann. Mit Hilfe eines Betätigungshebels 43 wird die Kapsel auf nachstehend noch beschriebene Art und Weise in eine Brühposition gebracht, in welcher am Auslass 44 eine dosierte Menge Kaffee ausgegeben wird (Figur 2). Die Kaffeemaschine verfügt zu diesem Zweck über einen Wassertank 45. Unter dem Auslass 44 ist eine Tropfschale 46 angeordnet, welche mit einem Sieb 47 abgedeckt ist.

In Figur 2 ist auch noch der mit der Tropfschale 46 verbundene, jedoch von aussen nicht sichtbare Kapselbehälter 48 dargestellt, welcher die gebrauchten Kapseln 2, sowie allfälliges Restwasser aus der Brühkammer aufnimmt.

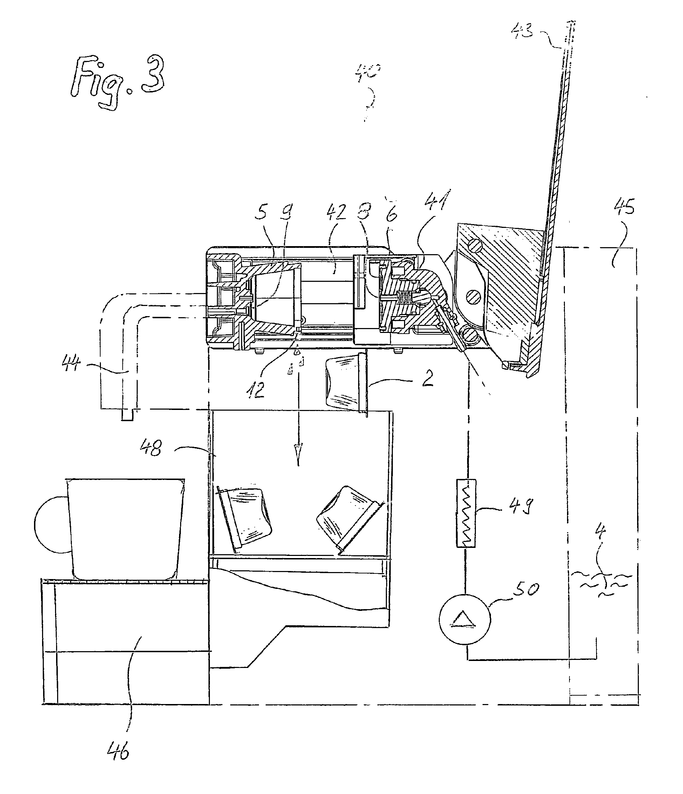

Diese Situation ist in Figur 3 dargestellt. Beim Zurückschieben des Betätigungshebels 43 nach dem Brühprozess fällt die benutzte Kapsel 2 nach unten in den Kapselbehälter 48. Das Brühmodul 41 weist beim vorliegenden Ausführungsbeispiel einen Halter 5 zur Aufnahme der Kapsel auf, welcher relativ fest angeordnet ist. Das Verschlussteil 6 zum Verschliessen der Brühkammer ist über den Betätigungshebel 43 linear gegen den Halter 5 bewegbar.

Nach dem Auswurf der Kapsel wird der Betätigungshebel 43 in der Regel wieder geschlossen, sodass die Brühkammer sich wieder in der abgedichteten Schliessposition befindet, gleich wie beim Brühvorgang. Auch in dieser Ruheposition der Kaffeemaschine kann über den Drainage-Kanal 12 Restwasser abtropfen.

Am Verschlussteil 6 ist eine Eintrittsöffnung 8 und am Halter 5 ist eine Austrittsöffnung 9 angeordnet. Letztere führt direkt zum Auslass 44. Das Brühwasser 4 im Tank 45 wird über eine Pumpe 50 und einen Durchlauferhitzer 49 der Eintrittsöffnung 8 zugeführt. Beim Schliessen des Brühmoduls durch Betätigen des Hebels 43 wird eine vorher eingeführte Kapsel mit hier nicht dargestellten Penetrationsmitteln penetriert, sodass das Brühwasser durch die Kapsel fliessen kann. Am unteren Rand des Halters 5 ist ein Drainage-Kanal 12 angeordnet, dessen Funktion nachstehend noch genauer beschrieben wird.

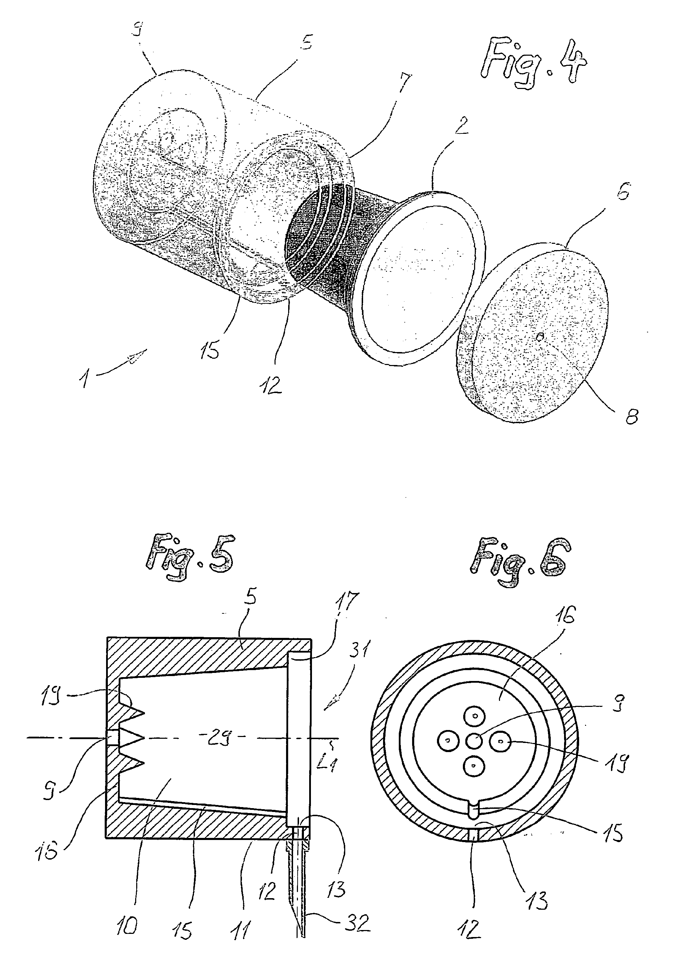

Figur 4 zeigt stark vereinfacht eine erfindungsgemässe Vorrichtung 1, die Bestandteil des in Figur 3 dargestellten Brühmoduls ist. Das Verschlussteil 6 und der Halter 5 werden gegeneinander gepresst und bilden so eine Aufnahmekammer 7 für die Kapsel 2.

Einzelheiten des Halters sind in den Figuren 5 und 6 dargestellt. Der Halter 5 weist eine Kavität 29 auf, die der Form der Kapsel angepasst ist und im vorliegenden Fall etwa kegelstumpfförmig ausgebildet ist. Am Boden 16 der Kavität ist die Austrittsöffnung 9 angeordnet. Um die Austrittsöffnung herum sind insgesamt vier Penetrationselemente 19 angeordnet, deren Anzahl und Anordnung natürlich beliebig variieren kann. Auf der Seite ihrer Öffnung 31 weist die Kavität 29 eine Stützschulter 17 auf und ebenfalls im Bereich der Öffnung ist ein Drainage-Kanal 12 angeordnet, der sich als radiale Bohrung von der Kammerinnenseite 10 zur Kammeraussenseite 11 erstreckt. Die Mündung 13 des Drainage-Kanals liegt im erweiterten Öffnungsbereich vor der Stützschulter 17. Vom Boden 16 der Kavität bis zur Stützschulter erstreckt sich eine Drainage-Rinne 15, die auf der gleichen radialen Ebene liegt wie der Drainage-Kanal 12.

Aus Figur 5 ist weiter ersichtlich, dass sich der Drainage-Kanal 12 in einer Abtropfkanüle 32 fortsetzen kann. Durch die angeschrägte Spitze dieser Kanüle wird das Abtropfen von Flüssigkeit begünstigt. In bestimmten Fällen wäre es selbstverständlich auch denkbar, dass der Drainage-Kanal in einen flexiblen Schlauch mündet.

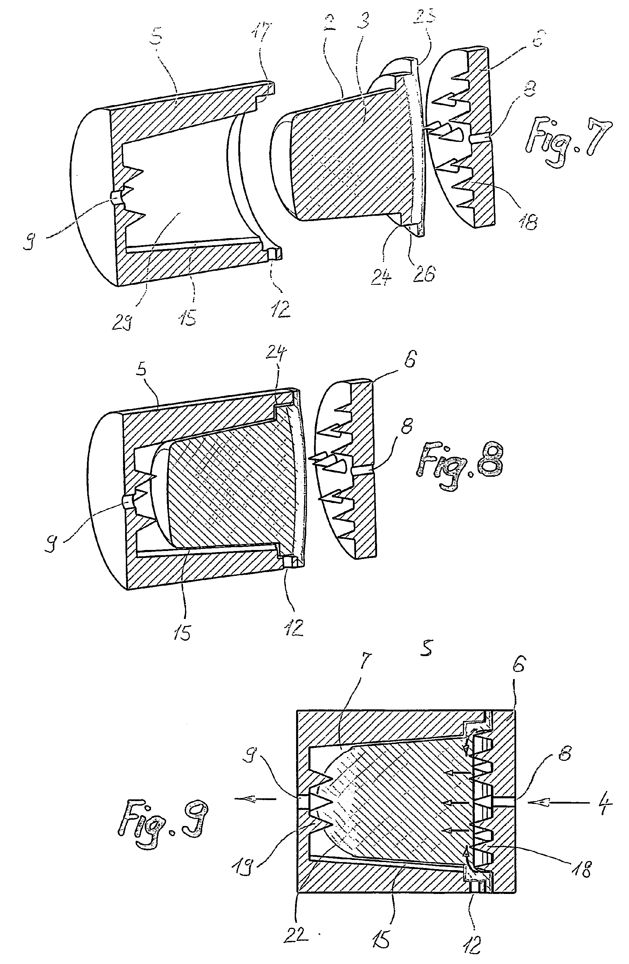

Figur 7 zeigt nochmals etwa die gleiche Situation wie Figur 4, jedoch im Querschnitt durch die radiale Ebene des Drainage-Kanals 12 und der Drainage-Rinne 15. Ausserdem sind hier auch die Penetrationselemente 18 am Verschlussteil 6 sichtbar, welche den Deckel 23 der Kapsel 2 penetrieren können. Die Kapsel 2 ist beispielsweise mit relativ kompakt gepresstem Kaffeepulver 3 gefüllt. Hier gut sichtbar ist ausserdem eine umlaufende Schulter 24 unmittelbar unter dem Kapselkragen 30, deren Aussenseite insgesamt eine Dichtfläche 26 bildet.

In Figur 8 ist eine Betriebsstellung dargestellt, bei der die Kapsel 2 bereits in die Kavität 29 des Halters 5 eingeführt ist. Das Verschlussteil 6 ist jedoch noch nicht dichtend gegen den Halter 5 gepresst. Wie dargestellt passt die umlaufende Schulter 24 etwa komplementär auf die umlaufende Schulter 17 am Halter 5. Dabei wird auch der Drainage-Kanal 12 verschlossen, jedoch noch nicht druckdicht abgedichtet. Die Drainage-Rinne 15 bildet zusammen mit der Aussenwand der Kapsel einen geschlossenen Kanal, der aber ebenfalls noch nicht druckdicht abgeschlossen ist.

Figur 9 zeigt die Situation während des Brühvorgangs, bei dem das mit dem Pfeil dargestellte Brühwasser 4 durch die Eintrittsöffnung 8 unter Druck in die verschlossene Aufnahmekammer 7 gepresst wird, wobei der Kaffeeextrakt aus der Austrittsöffnung 9 austritt. Die Penetrationselemente 18 haben beim Schliessen der Kammer 7 den Deckel 23 der Kapsel bereits penetriert und das einströmende Brühwasser presst den Deckel 23 der Kapsel gegen das Innere der Kapsel, sodass sich das Brühwasser auf der ganzen Fläche des Deckels verteilt und durch die geschaffenen Öffnungen ins Innere der Kapsel dringt. Die umlaufende Schulter 24 der Kapsel bewirkt dabei, dass einströmendes Brühwasser im Randbereich gegen das Zentrum der Kapsel hingelenkt wird, was mit den gekrümmten Pfeilen dargestellt ist. Dadurch wird verhindert, dass das Brühwasser im Randbereich sich einen Kanal zwischen der Kapselwand und dem Kaffeepressling suchen kann, was zu einer unvollständigen Extraktion führen würde.

Unter der Einwirkung des Innendrucks wölbt sich der Boden 22 der Kapsel nach aussen, sodass er durch die Penetrationselemente 19 am Boden der Kavität ebenfalls penetriert wird. Es wäre aber auch denkbar, dass der Boden und der Deckel der Kapsel beim schliessen der Kammer gleichzeitig penetriert werden.

Unter der Einwirkung des Innendrucks presst sich auch die umlaufende Dichtfläche 26 der Kapsel gegen die Mündung des Drainage-Kanals 12, sodass dieser dichtend verschlossen wird. Trotzdem ist gewährleistet, dass sich beim Aufbau eines übermässigen Innendrucks in der Kammer 7 die Flüssigkeit über die Drainage-Rinne 15 und den Drainage-Kanal 12 einen Weg auf die Aussenseite der Kammer verschaffen kann. Der Drainage-Kanal 12 erfüllt somit auch noch die Funktion eines Sicherheitsventils. Nach der Beendigung des Brühprozesses, also nach dem Druckabbau in der Kammer 7 kann überschüssige Flüssigkeit sofort wieder über den Drainage-Kanal 12 abgeführt werden, noch bevor die Brühkammer wieder geöffnet wird. Dadurch wird verhindert, dass überschüssige Flüssigkeit ausschliesslich über die Austrittsöffnung 9 abgebaut werden kann.

Es wäre selbstverständlich auch denkbar, dass während des Brühprozesses nur der Drainage-Kanal 12, nicht aber die Mündung der Drainage-Rinne 15 verschlossen wird. Unter bestimmten Voraussetzungen könnte aber auch nur die Mündung der Drainage-Rinne verschlossen werden, welche dann praktisch selber die Funktion eines Drainage-Kanals übernimmt.

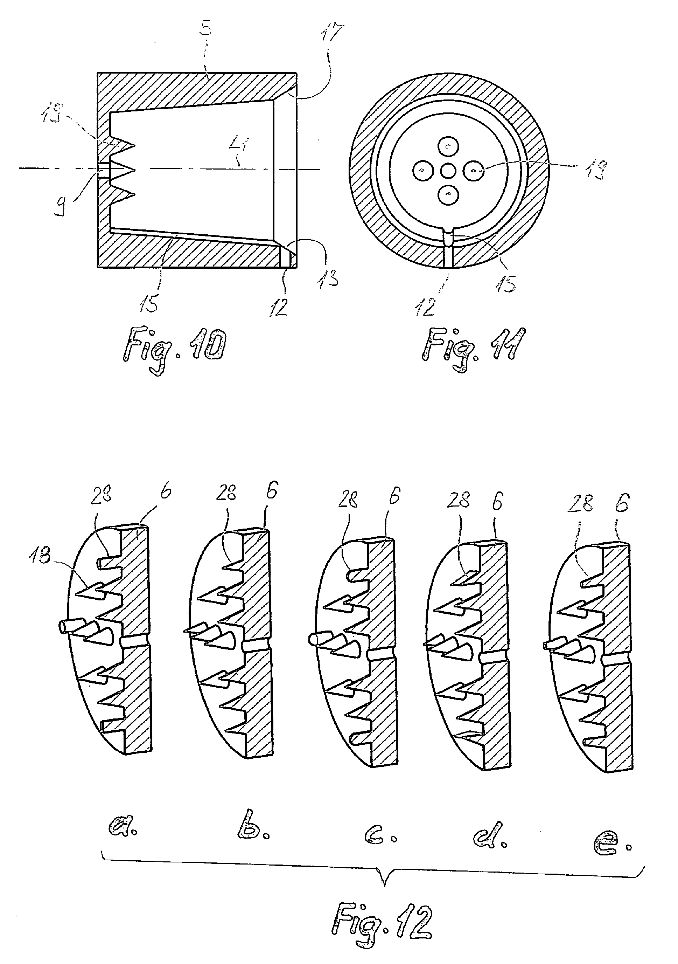

In den Figuren 10 und 11 ist eine alternative Ausführungsform eines Halters 5 dargestellt. Dieser unterscheidet sich vom Ausführungsbeispiel gemäss den Figuren 5 und 6 einzig dadurch, dass die umlaufende Schulter 17 nicht im rechten Winkel zur Längsmittelachse L1 der Kavität, sondern in einem Winkel zu dieser ausgebildet ist. Die Schulter 17 bildet dabei einen Konus, dessen Mantel sowohl die Mündung des Drainage-Kanals 12 als auch das Ende der Drainage-Rinne 15 schneidet.

Selbstverständlich sind weitere Querschnittskonfigurationen der Schulter 17 denkbar. Diese könnte auch kurvenförmig, insbesondere kreisbogenförmig verlaufen. Wichtig ist in jedem Fall bei allen Konfigurationen eine ausreichende Breite und eine ausreichende Höhe, damit rund um die Mündung 13 des Drainage-Kanals eine ausreichende Dichtfläche vorhanden bleibt.

In Figur 12 sind insgesamt fünf verschiedene Varianten von Verschlussteilen 6 dargestellt. Das Besondere an diesen Verschlussteilen besteht ausserdem noch darin, dass neben den bereits erwähnten Penetrationselementen 18 insbesondere im Aussenbereich noch zusätzliche Kompressionsmittel 28 angeordnet sind. Diese haben nicht primär die Aufgabe, den Deckel der Kapsel möglichst rasch zu penetrieren. Vielmehr sollen die Kompressionsmittel den Deckel der Kapsel im Randbereich aufspannen, wie dies in der Schliessstellung S gemäss Figur 9 dargestellt ist. Durch das Aufspannen des Kapseldeckels ist gewährleistet, dass sich das eintretende Brühwasser über die gesamte Oberfläche verteilt. Die Kompressionsmittel könnten aber auch eine Doppelfunktion haben, indem sie den Kapseldeckel wenigstens in einer letzten Phase des Schliessvorgangs auch noch ganz oder teilweise penetrieren. Die erwähnten Kompressionsmittel entfalten ihre optimale Wirkung unabhängig vom Drainage-Kanal 12, sodass sie auch bei konventionellen Vorrichtungen ohne Drainage-Kanal eingesetzt werden könnten.

Gemäss Figur 12a sind die Kompressionselemente 28 zylindrisch ausgebildet. Es sind insgesamt vier derartige Elemente in einer regelmässigen Winkelteilung von 90° über den Aussenrand des Verschlussteils 6 verteilt. Gemäss Figur 12b sind die Kompressionselemente 28 ebenfalls als Kegelspitzen ausgebildet, die sich von den übrigen Penetrationselementen nur durch ihre Höhe unterscheiden. In Figur 12c sind die Kompressionselemente als aussen kalottenartig abgerundete Zylinder dargestellt. Ersichtlicherweise vermögen diese den Deckel der Kapsel nicht zu penetrieren. Selbstverständlich kann die Anzahl und Anordnung der Kompressionselemente beliebig variieren. Es wäre denkbar, dass auch nur ein einziges Kompressionselement vorhanden ist. Dieses könnte beispielsweise auch die Form eines die Penetrationselemente einschliessenden Ringes haben.

Gemäss Figur 12d sind die Penetrationselemente 28 als Keile dargestellt. Schliesslich zeigt Figur 12e noch eine Variante, bei welcher die Kompressionselemente 28 im Querschnitt trapezförmig ausgebildet sind. Die Elemente könnten dabei sowohl als abgeflachte Keile oder kegelstumpfförmig ausgebildet sein. Selbstverständlich wären noch beliebig andere Varianten derartige Kompressionselemente denkbar, die sich je nach Ausgestaltung der Kapsel auch über verschiedene Bereiche des Verschlussteils erstrecken könnten.

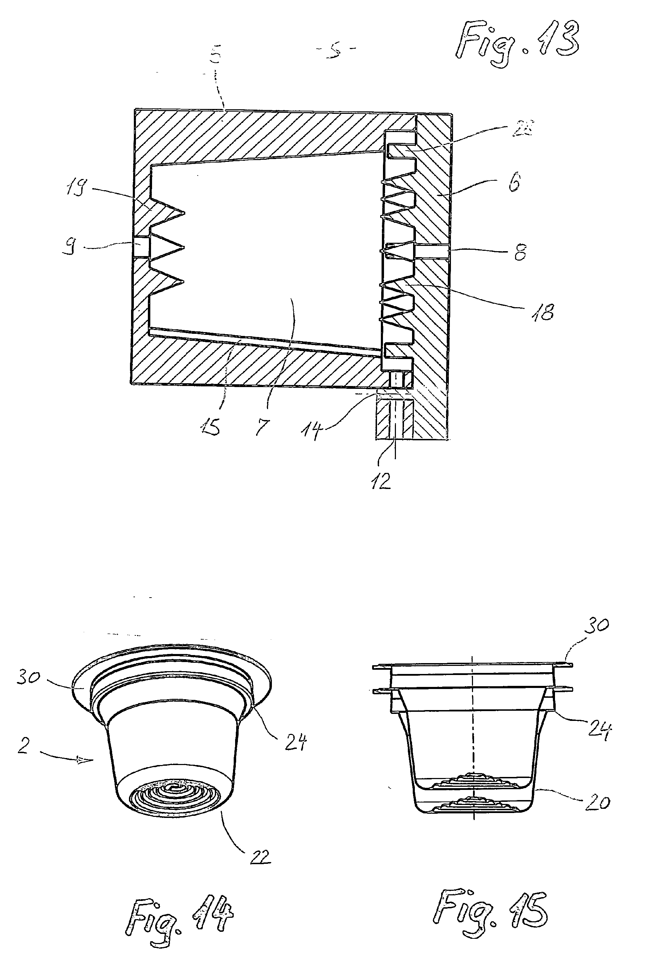

In Figur 13 ist eine alternative Variante einer Vorrichtung 1 dargestellt, bei welcher der Drainage-Kanal auch ohne eingelegte Kapsel in der Schliessstellung S abgedichtet wird. Zu diesem Zweck verfügt das Verschlussteil 6 über einen Schliesskörper 14, der beispielsweise zylindrisch oder quaderförmig ausgebildet sein kann. Im dargestellten Schliesszustand S versperrt dieser Schliesskörper den Drainage-Kanal 12 wie ein Absperrorgan an einem Ventil. Bei dieser Ausgestaltung kann die Aufnahmekammer 7 mit heissem Wasser gespült werden, ohne das Spülwasser über den Drainage-Kanal 12 austritt.

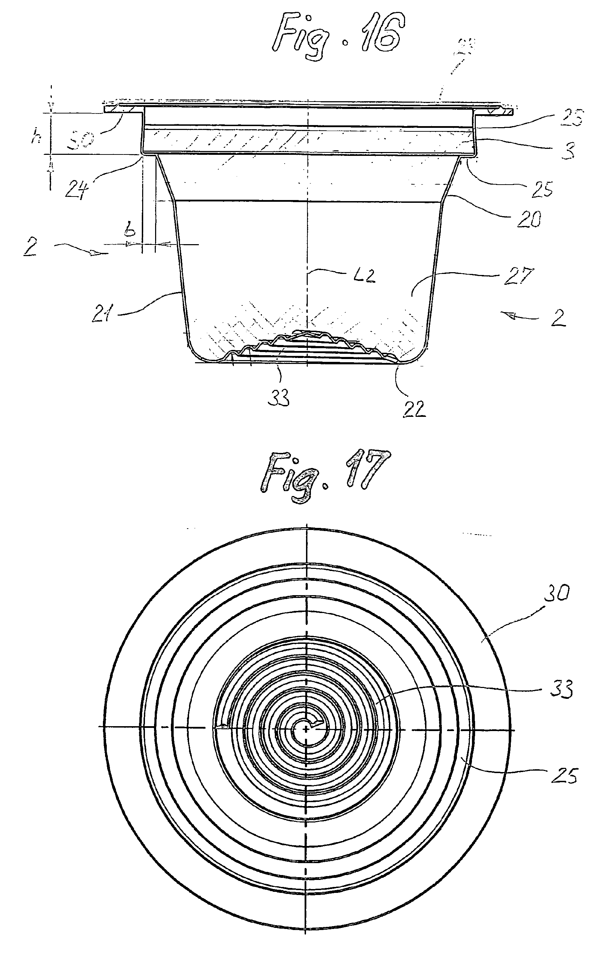

Figur 14 zeigt eine Aussenansicht einer Kapsel, welche anhand der Figuren 16 und 17 noch genauer beschrieben wird. Wie aus Figur 15 ersichtlich ist, erlaubt die umlaufende Schulter 24 auch noch eine vorteilhafte Stapelung der leeren Kapselkörper 20 vor dem Füllen und Verschliessen. Ein sogenannter Stapelrand ist zwar bereits bei konventionellen Kapseln bekannt.

Wie aus den Figuren 16 und 17 ersichtlich ist, wird der eigentliche Kapselkörper 20 bestehend aus Seitenwand 21, Boden 22 und umlaufender Schulter 24 durch einen Deckel 23 verschlossen, der mit dem umlaufenden Kapselkragen 30 verschweisst oder verklebt wird. Die Substanz 3, beispielsweise Kaffee, bildet einen kompakten Kuchen in der Kapselkammer 27, dessen Oberfläche unmittelbar unter dem Deckel 23 endet. Die gesamte Aussenseite der Schulter 24 bildet eine Dichtfläche 26, welche in der Lage ist, sich dichtend gegen eine komplementäre Fläche an der Brühkammer zu legen. Der Wandabschnitt 25, der vorliegend etwa im rechten Winkel zur Längsmittelachse L2 der Kapsel verläuft, hat eine Breite b von vorzugsweise mehr als 1 mm. Dieser Wandabschnitt legt sich in der Schliessstellung S der Brühkammer dichtend gegen das Ende der Drainage-Rinne 15 (siehe Figur 9). Die Höhe der Schulter 24 bezogen auf die Längsmittelachse L2 beträgt vorzugsweise wenigstens 3,5 mm, gemessen vom Ansatz des Wandabschnitts 25 bis zum Kapselkragen 30. In Ausnahmefällen z.B. bei einem Drainage-Kanal mit sehr geringem Durchmesser, könnte dieses Mass auch unterschritten werden.

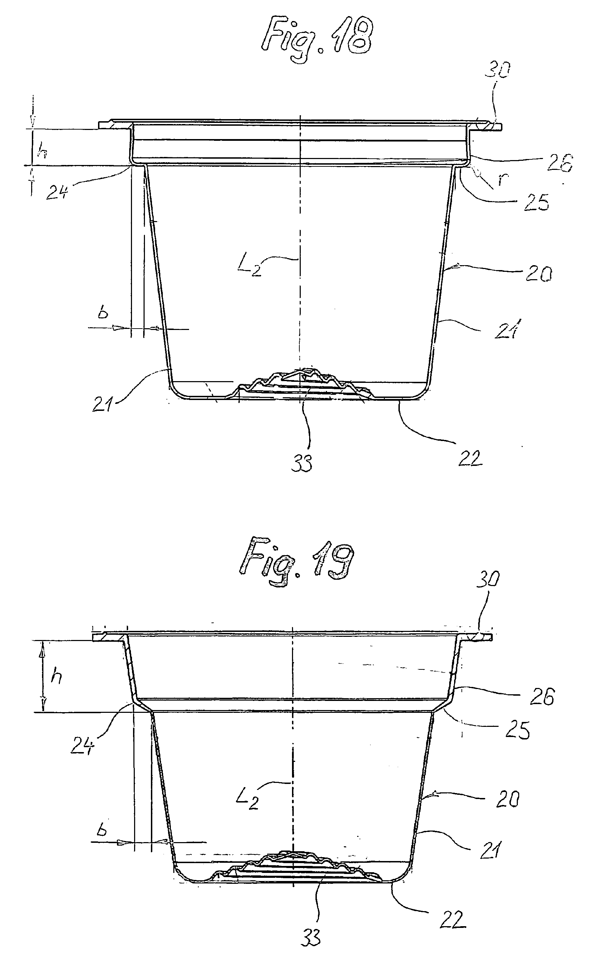

Figur 18 zeigt einen Kapselkörper 20 ohne Deckel und ohne Kapselinhalt mit einer alternativen Querschnittskonfiguration. Insbesondere die umlaufende Schuler 24 ist im Querschnitt mit einem Radius r gerundet ausgebildet. Die Breite b der Schulter in der Projektion kann dabei gleich sein wie beim Ausführungsbeispiel gemäss Figur 16. Auch die Kapselseitenwand 21 ist hier nicht zweistufig konisch ausgebildet wie beim Ausführungsbeispiel gemäss Figur 16, sondern sie verläuft direkt von der umlaufenden Schulter 24 mit dem Wandabschnitt 25 zum Boden 22. Auch dieser ist etwas anders ausgestaltet, weil die Faltenbalgspirale 33 einen kleineren Aussendurchmesser aufweist, sodass eine kreisringförmige Bodenfläche verbleibt. Die Faltenbalgspirale 33 hat die Aufgabe, den Boden 22 in diesem Bereich flexibel auszubilden, sodass sich der Faltenbalg bei Gegendruck gegen das Kapselinnere ausdehnt.

Figur 19 zeigt einen Kapselkörper 20, bei dem alle seitlichen Wandpartien, also Dichtfläche 26, Wandabschnitt 25 und restliche Seitenwand 21 sich gegen den Boden 22 hin konisch verjüngen. Die Höhe h der Schulter 24 ist im Verhältnis zur Breite b des Wandabschnitts 25 grösser als in den vorher beschriebenen Fällen. Die Höhe könnte hier z.B. 8 mm betragen.

Selbstverständlich sind insgesamt verschiedene Konfigurationen der Brühkammer und/oder der Kapsel bzw. der Portionsverpackung denkbar, ohne den Gegenstand der Erfindung zu verlassen. So könnten beispielsweise mehrere Drainage-Kanäle an verschiedenen Stellen der Kammerteile angeordnet sein. Das Gleiche gilt auch für die beschriebene Drainage-Rinne, wobei diese auch an der Kapsel angeordnet sein könnte.

## Patentansprüche

1. Vorrichtung (1) zum Zubereiten eines Getränks aus einer in einer Portionsverpackung, insbesondere in einer Kapsel (2) enthaltenen Substanz (3), mit einem flüssigen Medium, mit zwei in einer Schliessstellung gegeneinander pressbaren Kammerteilen (5, 6) zur Bildung einer Aufnahmekammer (7), in der die Portionsverpackung einschliessbar ist, wobei die Aufnahmekammer wenigstens eine Eintrittsöffnung (8) und wenigstens eine Austrittsöffnung (9) aufweist und das flüssige Medium in der Schliessstellung (S) durch die Portionsverpackung durchleitbar ist, wobei die Aufnahmekammer (7) wenigstens einen von der Kammerinnenseite (10) zur Kammeraussenseite (11) führenden Drainage-Kanal (12) aufweist, welcher derart an einem Wandabschnitt eines der Kammerteile angeordnet ist, dass er beim Erstellen der Schliessstellung (S) durch die Portionsverpackung abdichtbar ist, **dadurch gekennzeichnet, dass** der Drainage-Kanal (12) auf der Kammerinnenseite eine Mündungsöffnung (13) aufweist, welche durch einen Aussenwandabschnitt einer in der Kammer eingeschlossenen Portionsverpackung abdichtbar ist.

2. Vorrichtung nach Anspruch 1, **dadurch gekennzeichnet, dass** der Drainage-Kanal (12) durch einen dem anderen Kammerteil zugeordneten Schliesskörper (14) abdichtbar ist, der in der Schliessstellung den Drainage-Kanal versperrt.

3. Vorrichtung nach einem der Ansprüche 1 bis 2, **dadurch gekennzeichnet, dass** eines der Kammerteile als Halter (5) mit einer Kavität zur Aufnahme der Portionsverpackung und das andere Kammerteil als Verschlussteil (6) zum Verschliessen der Kavität ausgebildet ist und dass der Drainage-Kanal (12) am Halter angeordnet ist.

4. Vorrichtung nach Anspruch 3, **dadurch gekennzeichnet, dass** die Kavität wenigstens eine Drainage-Rinne (15) aufweist, welche sich bezogen auf eine Längsmittelachse L1 vorzugsweise vom Boden (16) der Kavität gegen deren Öffnung erstreckt.

5. Vorrichtung nach Anspruch 4, **dadurch gekennzeichnet, dass** die Kavität auf der Seite ihrer Öffnung eine zur Längsmittelachse vorzugsweise im rechten Winkel geneigte Stützschulter (17) zur Abstützung einer komplementären Wandpartie der Portionsverpackung aufweist, wobei die Drainage-Rinne (15) in die Stützschulter mündet und der Drainage-Kanal (12) in der Stützschulter oder in einem unmittelbar daran angrenzenden Bereich beginnt.

6. Vorrichtung nach einem der Ansprüche 1 bis 5, **dadurch gekennzeichnet, dass** wenigstens ein Kammerteil wenigstens ein Penetrationselement (18) zum penetrieren der Portionsverpackung in der Schliessstellung (S) aufweist.

7. Vorrichtung nach einem der Ansprüche 1 bis 6, **dadurch gekennzeichnet, dass** der Drainage-Kanal (12) einen Querschnitt aufweist, der vorzugsweise 0,1 mm² bis 10 mm² beträgt.

8. Vorrichtung nach einem der Ansprüche 1 bis 7, **dadurch gekennzeichnet, dass** der Drainage-Kanal (12) zu einem Gefäss für die Aufnahme von über den Drainage-Kanal abgeführter Flüssigkeit führt.

9. Vorrichtung nach einem der Ansprüche 1 bis 8, **dadurch gekennzeichnet, dass** die Aufnahmekammer rotationssymmetrisch ausgebildet ist und dass der Drainage-Kanal (12) als radiale Bohrung in einem der Kammerteile ausgebildet ist.

10. Vorrichtung nach einem der Ansprüche 1 bis 9 mit einer Kapsel(2) bestehend aus einem vorzugsweise rotationssymmetrischen Kapselkörper (20) mit einer Seitenwand (21) und mit einem einstückig mit dieser ausgebildeten Boden (22), sowie mit einem den Kapselkörper abdeckenden Deckel (23) zur Bildung einer geschlossenen Kapselkammer (27), welche eine Substanz (3) für die Zubereitung eines Getränks enthält, wobei der Deckel und der Boden für die Durchleitung einer Flüssigkeit mit ausserhalb der Kapsel angeordneten Mitteln der Vorrichtung penetrierbar sind, wobei die Seitenwand (21) in einem dem Deckel (23) zugewandten Bereich im Querschnitt eine umlaufende Schulter (24) bildet, die wenigstens einen bezogen auf die Längsmittelachse (L2) der Kapsel im Querschnitt geneigten oder gekrümmten Wandabschnitt (25) aufweist, wobei die Aussenseite der Schulter eine umlaufende Dichtfläche (26) bildet, welche dichtend gegen eine komplementäre Auflagefläche pressbar ist, wobei der Drainage-Kanal (12) in der Schliessstellung (S) durch die Dichtfläche (26) der umlaufenden Schulter (24) abdichtbar ist.

11. Vorrichtung nach Anspruch 5 mit einer Kapsel (2) bestehend aus einem vorzugsweise rotationssymmetrischen Kapselkörper (20) mit einer Seitenwand (21) und mit einem einstückig mit dieser ausgebildeten Boden (22), sowie mit einem den Kapselkörper abdeckenden Deckel (23) zur Bildung einer geschlossenen Kapselkammer (27), welche eine Substanz (3) für die Zubereitung eines Getränks enthält, wobei der Deckel und der Boden für die Durchleitung einer Flüssigkeit mit ausserhalb der Kapsel angeordneten Mitteln der Vorrichtung penetrierbar sind, wobei die Seitenwand (21) in einem dem Deckel (23) zugewandten Bereich im Querschnitt eine umlaufende Schulter (24) bildet, die wenigstens einen bezogen auf die Längsmittelachse (L2) der Kapsel im Querschnitt geneigten oder gekrümmten Wandabschnitt (25) aufweist, wobei die Aussenseite der Schulter eine umlaufende Dichtfläche (26) bildet, welche dichtend gegen eine komplementäre Auflagefläche pressbar ist, wobei die umlaufende Schulter der Kapsel auf der Stützschulter (17) der Kavität aufliegt und die Dichtfläche (26) der umlaufenden Schulter (24) entweder die Drainage-Rinne (15) oder den Drainage-Kanal (12) oder beide abdichtet.

12. Vorrichtung nach Anspruch 10 oder 11 umfassend eine Kapsel, wobei der geneigte oder gekrümmte Wandabschnitt (25) eine Breite (b) von wenigstens 1 mm aufweist und dass die umlaufende Schulter (24) bezogen auf die Längsmittelachse (L2) eine Höhe von vorzugsweise wenigstens 3,5 mm aufweist.

13. Vorrichtung nach einem der Ansprüche 1 bis 9, **dadurch gekennzeichnet, dass** wenigstens eines der Kammerteile gegen die Aufnahmekammer gerichtete Kompressionsmittel (28) aufweist, mit denen in der Schliessstellung (S) die Portionsverpackung beaufschlagbar sind.

## Claims

1. Device (1) for preparing a beverage from a substance (3) which is contained in a portion pack, in particular in a capsule (2), using a liquid medium, having two chamber parts (5, 6), which can be pressed against one another in a closed position, to form a receiving chamber (7), in which the portion pack can be enclosed, the receiving chamber having at least one inlet opening (8) and at least one outlet opening (9), and it being possible to pass the liquid medium through the portion pack in the closed position (S), the receiving chamber (7) having at least one drainage channel (12), which leads from the chamber interior (10) to the chamber exterior (11) and which is arranged in a wall section of one of the chamber parts in such a way that it can be sealed off by the portion pack when the closed position (S) is being created, **characterized in that**, on the inside of the chamber, the drainage channel (12) has a mouth opening (13), which can be sealed off by an outer wall section of a portion pack enclosed in the chamber.

2. Device according to Claim 1, **characterized in that** the drainage channel (12) can be sealed off by a closing element (14) which is assigned to the other chamber part and blocks the drainage channel in the closed position.

3. Device according to one of Claims 1 to 2, **characterized in that** one of the chamber parts is designed as a holder (5) with a cavity for receiving the portion pack, and the other chamber part is designed as a closure part (6) for closing the cavity, and **in that** the drainage channel (12) is arranged in the holder.

4. Device according to Claim 3, **characterized in that** the cavity has at least one drainage groove (15), which preferably extends from the bottom (16) of the cavity toward the opening thereof, relative to a longitudinal centre line L1.

5. Device according to Claim 4, **characterized in that** the cavity has a supporting shoulder (17) at the same end as the opening thereof sloping preferably at a right angle relative to the longitudinal centre line, said supporting shoulder being intended to support a complementary wall portion of the portion pack, the drainage groove (15) opening into the supporting shoulder, and the drainage channel (12) beginning in the supporting shoulder or in an immediately adjoining area.

6. Device according to one of Claims 1 to 5, **characterized in that** at least one chamber part has at least one penetration element (18) for penetrating the portion pack in the closed position (S).

7. Device according to one of Claims 1 to 6, **characterized in that** the drainage channel (12) has a cross section which is preferably 0.1 mm² to 10 mm².

8. Device according to one of Claims 1 to 7, **characterized in that** the drainage channel (12) leads to a vessel for receiving liquid carried away via the drainage channel.

9. Device according to one of Claims 1 to 8, **characterized in that** the receiving chamber is of rotationally symmetrical design and **in that** the drainage channel (12) is designed as a radial bore in one of the chamber parts.

10. Device according to one of Claims 1 to 9, having a capsule (2) consisting of a capsule body (20), which is preferably rotationally symmetrical, having a side wall (21) and a bottom (22) formed integrally therewith, and having a lid (23) that covers the capsule body for the formation of a closed capsule chamber (27) which contains a substance (3) for preparing a beverage, the lid and the bottom being capable of penetration for the passage of a liquid by means of the device arranged outside the capsule, in an area facing the lid (23), the side wall (21) having an encircling shoulder (24) in cross section, which has at least one wall section (25) which slopes or is curved in cross section, relative to the longitudinal centre line (L2) of the capsule, the outside of the shoulder forming an encircling sealing surface (26) which can be pressed in a sealing manner against a complementary contact surface, wherein the drainage channel (12) can be sealed off by the sealing surface (26) of the encircling shoulder (24) in the closed position (S).

11. Device according to Claim 5, having a capsule (2) consisting of a capsule body (20), which is preferably rotationally symmetrical, having a side wall (21) and a bottom (22) formed integrally therewith, and having a lid (23) that covers the capsule body for the formation of a closed capsule chamber (27) which contains a substance (3) for preparing a beverage, the lid and the bottom being capable of penetration for the passage of a liquid by means of the device arranged outside the capsule, in an area facing the lid (23), the side wall (21) having an encircling shoulder (24) in cross section, which has at least one wall section (25) which slopes or is curved in cross section, relative to the longitudinal centre line (L2) of the capsule, the outside of the shoulder forming an encircling sealing surface (26) which can be pressed in a sealing manner against a complementary contact surface, wherein the encircling shoulder of the capsule rests on the supporting shoulder (17) of the cavity, and the sealing surface (26) of the encircling shoulder (24) seals off either the drainage groove (15) or the drainage channel (12) or both.

12. Device according to Claim 10 or 11, comprising a capsule, wherein the sloping or curved wall section (25) has a width (b) of at least 1 mm and the encircling shoulder (24) has a height of preferably at least 3.5 mm, relative to the longitudinal centre line (L2).

13. Device according to one of Claims 1 to 9, **characterized in that** at least one of the chamber parts has compression means (28) directed toward the receiving chamber, by means of which the portion pack can be acted upon in the closed position (S).

## Revendications

1. Dispositif (1) de préparation d'une boisson à partir d'une substance (3) contenue dans un conditionnement individuel, notamment dans une capsule (2), à l'aide d'un agent liquide, avec deux parties de compartiment (5, 6) compressibles l'une contre l'autre dans une position de fermeture pour former un compartiment réceptacle (7), dans lequel le conditionnement individuel peut être introduit, le compartiment réceptacle comportant au moins une ouverture d'entrée (8) et au moins une ouverture de sortie (9) et l'agent liquide pouvant être conduit, dans la position de fermeture (S), à travers le conditionnement individuel, le compartiment réceptacle (7) comportant au moins un canal de drainage (12) allant du côté intérieur du compartiment (10) vers le côté extérieur du compartiment (11) et disposé de telle sorte au niveau d'une section de paroi d'une des parties de compartiment qu'il peut être étanchéifié par le biais du conditionnement individuel dès le passage en position de fermeture (S), **caractérisé en ce que** le canal de drainage (12) comporte sur le côté intérieur du compartiment une ouverture d'embouchure (13) pouvant être étanchéifiée par le biais d'une section de paroi extérieure d'un conditionnement individuel introduit dans le compartiment.

2. Dispositif selon la revendication 1, **caractérisé en ce que** le canal de drainage (12) peut être étanchéifié par le biais d'un corps de fermeture (14) associé à l'autre partie de compartiment et obstruant le canal de drainage dans la position de fermeture.

3. Dispositif selon l'une quelconque des revendications 1 à 2, **caractérisé en ce qu'**une des parties de compartiment prend la forme d'un support (5) doté d'une cavité servant de réceptacle au conditionnement individuel et que l'autre partie de compartiment prend la forme d'une partie de fermeture (6) servant à fermer la cavité et que le canal de drainage (12) est disposé contre le support.

4. Dispositif selon la revendication 3, **caractérisé en ce que** la cavité comporte au moins une rigole de drainage (15) s'étendant, par rapport à un axe central longitudinal L1, de préférence en partant du fond (16) de la cavité de façon à s'opposer à son ouverture.

5. Dispositif selon la revendication 4, **caractérisé en ce que** la cavité présente sur le côté de son ouverture un épaulement d'appui (17) incliné de préférence à angle droit par rapport à l'axe central longitudinal afin de soutenir une partie de paroi complémentaire du conditionnement individuel, la rigole de drainage (15) débouchant dans l'épaulement d'appui et le canal de drainage (12) débutant dans l'épaulement d'appui ou dans une zone directement connexe.

6. Dispositif selon l'une quelconque des revendications 1 à 5, **caractérisé en ce qu'**au moins une partie de compartiment comporte au moins un élément pénétrant (18) servant à pénétrer le conditionnement individuel dans la position de fermeture (S).

7. Dispositif selon l'une quelconque des revendications 1 à 6, **caractérisé en ce que** le canal de drainage (12) présente une section transversale allant de préférence de 0,1 mm² à 10 mm² .

8. Dispositif selon l'une quelconque des revendications 1 à 7, **caractérisé en ce que** le canal de drainage (12) conduit à une cuve recevant le liquide évacué par le canal de drainage.

9. Dispositif selon l'une quelconque des revendications 1 à 8, **caractérisé en ce que** le compartiment réceptacle est réalisé de façon symétrique en rotation et que le canal de drainage (12) prend la forme d'un alésage radial pratiqué dans une des parties de compartiment.

10. Dispositif selon l'une quelconque des revendications 1 à 9, doté d'une capsule (2) composée d'un corps de capsule (20) de préférence symétrique en rotation avec une paroi latérale (21) et avec un fond (22) réalisé d'un seul tenant avec celle-ci, ainsi qu'avec un couvercle (23) recouvrant le corps de capsule pour former un compartiment de capsule (27) fermé, ledit compartiment contenant une substance (3) servant à la préparation d'une boisson, le couvercle et le fond pouvant être pénétrés pour introduire un liquide à l'aide de moyens du dispositif disposés à l'extérieur de la capsule, la paroi latérale (21) formant un épaulement (24) périphérique en section transversale dans une zone orientée vers le couvercle (23), ledit épaulement comportant une section de paroi (25) inclinée ou incurvée en section transversale par rapport à l'axe central longitudinal (L2) de la capsule, le côté extérieur de l'épaulement formant une surface étanche (26) périphérique pouvant être comprimée de façon étanche contre une surface d'appui complémentaire, le canal de drainage (12) pouvant être étanchéifié dans la position de fermeture (S) par le biais de la surface étanche (26) de l'épaulement (24) périphérique.

11. Dispositif selon la revendication 5, doté d'une capsule (2) composée d'un corps de capsule (20) de préférence symétrique en rotation avec une paroi latérale (21) et avec un fond (22) réalisé d'un seul tenant avec celle-ci, ainsi qu'avec un couvercle (23) recouvrant le corps de capsule pour former un compartiment de capsule (27) fermé, ledit compartiment contenant une substance (3) servant à la préparation d'une boisson, le couvercle et le fond pouvant être pénétrés pour introduire un liquide à l'aide de moyens du dispositif disposés à l'extérieur de la capsule, la paroi latérale (21) formant un épaulement (24) périphérique en section transversale dans une zone orientée vers le couvercle (23), ledit épaulement comportant une section de paroi (25) inclinée ou incurvée en section transversale par rapport à l'axe central longitudinal (L2) de la capsule, le côté extérieur de l'épaulement formant une surface étanche (26) périphérique pouvant être comprimée de façon étanche contre une surface d'appui complémentaire, l'épaulement périphérique de la capsule reposant sur l'épaulement d'appui (17) de la cavité et la surface étanche (26) de l'épaulement (24) périphérique étanchéifiant soit la rigole de drainage (15) soit le canal de drainage (12) soit les deux.

12. Dispositif selon la revendication 10 ou 11, comprenant une capsule, la section de paroi (25) inclinée ou incurvée présentant une largeur (b) d'au moins 1 mm et l'épaulement (24) périphérique présentant une hauteur de préférence d'au moins 3,5 mm par rapport à l'axe central longitudinal (L2).

13. Dispositif selon l'une quelconque des revendications 1 à 9, **caractérisé en ce qu'**au moins une des parties de compartiment comporte des moyens de compression (28) orientés contre le compartiment réceptacle pouvant être utilisés pour comprimer le conditionnement individuel dans la position de fermeture (S).
